# EUROPÄISCHE PATENTSCHRIFT

(11) **EP 3 119 566 B1**
(45) Veröffentlichungstag und Bekanntmachung des Hinweises auf die Patenterteilung: **20.10.2021**
(21) Anmeldenummer: 15710430.8
(22) Anmeldetag: 06.03.2015
(51) Int. Cl.: B25J 15/04, B05B 13/04

(54) **ROBOTERANORDNUNG UND ENTSPRECHENDES MONTAGEVERFAHREN**
ROBOT ASSEMBLY AND CORRESPONDING ASSEMBLY METHOD
SYSTÈME DE ROBOT ET PROCÉDÉ DE MONTAGE CORRESPONDANT

(30) Priorität: 18.03.2014 DE 102014003931
(43) Veröffentlichungstag der Anmeldung: 25.01.2017
(73) Patentinhaber: Dürr Systems AG, 74321 Bietigheim-Bissingen (DE)
(72) Erfinder: SOTZNY, Steffen, 71720 Oberstenfeld (DE); SCHULZ, Alexander, 71672 Marbach (DE); HEUNSCH, Mario, 71691 Freiberg am Neckar (DE)
(74) Vertreter: v. Bezold & Partner Patentanwälte - PartG mbB
(86) Internationale Anmeldenummer: PCT/EP2015/000504
(87) Internationale Veröffentlichungsnummer: WO 2015/139820

(56) Entgegenhaltungen:
- EP-A1- 2 777 822
- WO-A1-2004/007089
- WO-A1-2007/027147
- DE-A1- 19 914 040
- DE-U1- 9 001 451
- US-A1- 2011 049 110

## Beschreibung

Die Erfindung betrifft eine Roboteranordnung, insbesondere mit einem Lackierroboter, sowie ein entsprechendes Montageverfahren für eine derartige Roboteranordnung.

In modernen Lackieranlagen zur Lackierung von Kraftfahrzeugkarosseriebauteilen werden üblicherweise mehrachsige Lackierroboter mit einer seriellen Kinematik eingesetzt, um Rotationszerstäuber hochbeweglich zu führen. Der Rotationszerstäuber wird hierbei in der Regel an einem Montageflansch an einer Roboterhandachse des Lackierroboters montiert, wobei der Rotationszerstäuber über den Montageflansch mit den erforderlichen Medien versorgt wird, wie beispielsweise Antriebsluft zum Antrieb einer Druckluftturbine, Lenkluft zur Formung des Sprühstrahls, Hochspannung für eine elektrostatische Lackaufladung, Lagerluft für Luftlager in dem Rotationszerstäuber, Lösemittelleitungen sowie Rückführleitungen, um nur einige Beispiele zu nennen.

Bei derartigen Lackieranlagen besteht beispielsweise in Testphasen das Bedürfnis, verschiedene Typen von Applikationsgeräten (z.B. Rotationszerstäuber, Luftzerstäuber, etc.) nacheinander zu testen, was einen Austausch der montierten Applikationsgeräte erfordert.

Eine bekannte Methode zum Auswechseln der Applikationsgeräte besteht darin, dass die einzelnen Versorgungsleitungen für das Applikationsgerät an der nächsten Trennstelle hinter dem Montageflansch gelöst werden, um dann ein anderes Applikationsgerät montieren zu können. Diese Methode des Auswechselns eines Applikationsgerätes ist jedoch äußerst zeitintensiv, da die einzelnen Versorgungsleitungen individuell getrennt und wieder miteinander verbunden werden müssen. Darüber hinaus ist es hierbei problematisch, dass die Trennstellen für die einzelnen Versorgungsleitungen in der Regel nicht unmittelbar hinter der Handachse angebracht sein können, da ein Drehwinkel von ca. ±540° ausgeglichen werden muss. Die Trennstelle der Versorgungsleitungen ist deshalb üblicherweise relativ weit stromaufwärts im Roboterarm angeordnet, was das Trennen und Wiederverbinden der einzelnen Versorgungsleitungen erschwert. Diese bekannte Methode zum Auswechseln eines Applikationsgeräts an einem Lackierroboter ist deshalb äußerst aufwändig und benötigt zum Umrüsten auf einen anderen Zerstäubertyp bis zu zwei Stunden.

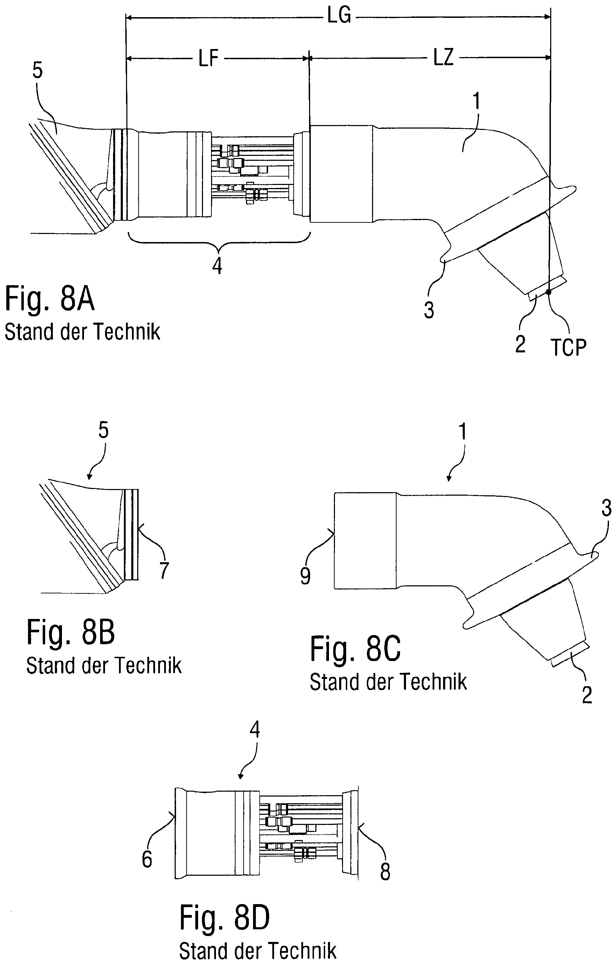

Eine andere bekannte Methode zum Auswechseln eines Applikationsgerätes an einem Lackierroboter wird nachfolgend unter Bezugnahme auf die Figuren 8A-8D beschrieben. So zeigen die Figuren einen elektrostatischen Zerstäuber 1 mit einem Glockenteller 2 und einem Außenaufladungsring 3 zur elektrostatischen Beschichtungsmittelaufladung, was an sich aus dem Stand der Technik bekannt ist. Der Zerstäuber 1 ist über einen Zwischenflansch 4 an einer Roboterhandachse 5 montiert, wobei die Roboterhandachse 5 Bestandteil eines herkömmlichen mehrachsigen Lackierroboters mit einer seriellen Kinematik ist, so dass auf eine detaillierte Beschreibung des Lackierroboters an dieser Stelle verzichtet werden kann. Der Zwischenflansch 4 weist roboterseitig eine Flanschfläche 6 auf, die mit einem entsprechenden Roboterflansch 7 an der Roboterhandachse 5 verbunden ist. Darüber hinaus weist der Zwischenflansch 4 eine zerstäuberseitige Flanschfläche 8 auf, die an einem entsprechenden Zerstäuberflansch 9 des Rotationszerstäubers 1 angeschlossen wird. Der Rotoberflansch 7 an der Roboterhandachse 5 stellt hierbei nicht nur die Versorgungsleitungen (z.B. für Antriebsluft, Lenkluft, Hochspannung, Lack, Lösemittel, Rückführung, etc.) für den aktuell montierten Typ des Rotationszerstäubers 1 zur Verfügung. Vielmehr weist der Roboterflansch 7 an der Roboterhandachse 5 eine Anschlusskonfiguration mit einer Vielzahl von Anschlüssen für alle möglichen Typen von Applikationsgeräten auf. Der Zwischenflansch 4 ist hierbei individuell an den jeweiligen Typ des Rotationszerstäubers 1 angepasst und wählt von denjenigen Anschlüssen, die an dem Roboterflansch 7 bereitgestellt werden, diejenigen Anschlüsse aus, die von dem jeweiligen Typ des Rotationszerstäubers 1 benötigt werden. Die von dem jeweiligen Typ des Rotationszerstäubers 1 benötigten Anschlüsse werden dann an der zerstäuberseitigen Flanschfläche 8 des Zwischenflanschs 4 in der erforderlichen Anschlusskonfiguration bereitgestellt, so dass der Zerstäuber 1 dann an dem Zwischenflansch 4 montiert werden kann. Der Zwischenflansch 4 ist also ein Adapter, der die benötigte Anschlusskonfiguration an den jeweiligen Typ des Rotationszerstäubers 1 anpasst.

Hierbei ist zu berücksichtigen, dass der Zwischenflansch 4 eine bestimmte Baulänge LF aufweist, die sich mit einer entsprechenden Baulänge LZ des Rotationszerstäubers 1 zu einer gesamten Baulänge LG zwischen dem Roboterflansch 7 und einem sogenannten Tool Center Point TCP addiert. Der Lackierroboter wird hierbei von einer zentralen Robotersteuerung angesteuert, wobei die gesamte Baulänge LG zwischen dem Roboterflansch 7 und dem Tool Center Point TCP in der Robotersteuerung hinterlegt ist. Problematisch ist hierbei, dass ein Auswechseln des Rotationszerstäubers 1 zusammen mit dem individuell angepassten Zwischenflansch 4 in der Regel zu einer Veränderung der tatsächlichen Baulänge LG zwischen dem Roboterflansch 7 und dem Tool Center Point TCP führt. Zum einen liegt dies daran, dass der ausgewechselte neue Zerstäuber 1 in der Regel eine andere Baulänge LZ aufweisen kann. Zum anderen beruht die Änderung der gesamten Baulänge LG beim Auswechseln des Rotationszerstäubers 1 aber auch darauf, dass der Zwischenflansch 4 eine andere Baulänge LF aufweisen kann. Die veränderte Baulänge LG nach dem Auswechseln des Rotationszerstäubers 1 mit dem Zwischenflansch 4 führt jedoch dazu, dass die in der Robotersteuerung hinterlegte Baulänge LG nicht mehr mit der tatsächlichen Baulänge LG übereinstimmt, so dass der Tool Center Point TCP auf einer falschen Bahn bewegt wird. Dies hat wiederum zur Folge, dass die auf diese Weise erzielten Lackierergebnisse kaum vergleichbar sind.

Aus DE 90 01 451 U1 ist ein Wechselflansch bekannt, der es ermöglicht, ein Simulationswerkzeug gegen ein reales Applikationsgerät auszutauschen. Der Wechselflansch bewirkt hierbei eine Geometrieanpassung, damit das Simulationswerkzeug hinsichtlich seiner räumlichen Anordnung an dem Roboter dem realen Applikationsgerät entspricht. Allerdings eignet sich dieser Gedanke bisher nicht zum Austausch realer Applikationsgeräte, da der Wechselflansch hierzu eine Vielzahl von Leitungsdurchführungen benötigen würde, die in dem zur Verfügung stehenden Bauraum keinen Platz finden.

Ferner ist zum Stand der Technik hinzuweisen auf WO 2010/028864 A2, EP 1 285 733 A2 und DE 37 80 874 T2.

Schließlich ist zum Stand der Technik noch hinzuweisen auf US 2011/0049110 A1 und auf die nachveröffentlichte europäische Patentanmeldung EP 2 777 822 A1. Diese Druckschriften offenbaren einen Applikationsroboter zur Führung einer Plasmasprühvorrichtung. Hierbei werden die Leitungen zum Betrieb der Plasmasprühvorrichtung jedoch an der Außenseite geführt und müssen somit nicht durch den Zwischenflansch geführt werden. Diese Druckschriften sind deshalb fernliegend.

Der Erfindung liegt deshalb die Aufgabe zugrunde, die vorstehend beschriebenen Probleme zu lösen. Zum einen soll das Auswechseln des Applikationsgerätes an einem Applikationsroboter einfach und schnell möglich sein. Zum anderen sollen die mit verschiedenen Typen von Applikationsgeräten erzielten Lackierergebnisse aber auch miteinander vergleichbar sein.

Diese Aufgabe wird durch eine erfindungsgemäße Roboteranordnung bzw. durch ein entsprechendes Montageverfahren gemäß den nebengeordneten Ansprüchen gelöst.

Die Erfindung umfasst die allgemeine technische Lehre, den Zwischenflansch einerseits und das jeweilige Applikationsgerät andererseits paarweise aneinander anzupassen, und zwar nicht nur hinsichtlich der jeweils benötigten Anschlusskonfiguration, sondern auch hinsichtlich der Baulänge. Falls also beispielsweise ein Applikationsgerät mit einer relativ kurzen Baulänge montiert werden soll, so wird hierfür ein Zwischenflansch mit einer entsprechend großen Baulänge kombiniert, um die kürzere Baulänge des Applikationsgerätes auszugleichen. Falls dagegen ein Applikationsgerät mit einer relativ großen Baulänge montiert werden soll, so wird dieses Applikationsgerät mit einem Zwischenflansch mit einer entsprechend geringen Baulänge kombiniert. Diese Anpassung der Baulängen des Applikationsgerätes einerseits und des Zwischenflansches andererseits wird so vorgenommen, dass die gesamte Baulänge eines Paars aus Applikationsgerät und Zwischenflansch immer konstant ist und derjenigen Baulänge entspricht, die in der Robotersteuerung hinterlegt ist und die zur Steuerung des Tool Center Points TCP berücksichtigt wird. Dies bietet den Vorteil, dass der Tool Center Point TCP unabhängig von dem Typ des jeweils montierten Applikationsgerätes immer auf der programmierten Bahn bewegt wird. Eine Umrüstung auf einen anderen Typ eines Applikationsgeräts führt also im Gegensatz zu dem eingangs beschriebenen Stand der Technik nicht dazu, dass der Tool Center Point von der programmierten Bewegungsbahn abweicht.

In der Regel weist der Tool Center Point eines Applikationsgerätes (z.B. Rotationszerstäuber) gegenüber der Mittelachse des Roboterflansches einen seitlichen Versatz auf, der typabhängig schwanken kann. Es ist jedoch wünschenswert, dass ein Umrüsten des Applikationsgerätes den Tool Center Point nicht nur in Längsrichtung unbeeinflusst lässt, sondern auch in seitlicher Richtung. Es besteht deshalb im Rahmen der Erfindung auch die Möglichkeit, dass der seitliche Versatz durch den paarweise an das Applikationsgerät angepassten Zwischenflansch so angepasst ist, dass die tatsächliche Gesamtbreite zwischen der Mittelachse des Roboterflanschs und dem Tool Center Point mit der in der Robotersteuerung hinterlegten Gesamtbreite übereinstimmt. Hierbei führt ein Umrüsten des Applikationsgeräts also zu keiner Verschiebung des tatsächlichen Tool Center Points, und zwar weder in Längsrichtung noch in seitlicher Richtung.

Es wurde bereits vorstehend erwähnt, dass der erfindungsgemäße Zwischenflansch von den an dem Roboterflansch der Roboterhandachse bereitgestellten Anschlüssen diejenigen Anschlüsse auswählt, die für den jeweiligen Typ des Applikationsgeräts erforderlich sind, wobei diese Anschlüsse dann an der applikationsgeräteseitigen Flanschfläche des Zwischenflanschs in der erforderlichen Anschlusskonfiguration bereitgestellt werden. Diese Anpassungsfunktion des Zwischenflanschs ist äußerst komplex, da eine Vielzahl von Leitungen erforderlich ist, beispielsweise für Antriebsluft, Lagerluft, Lenkluft, Lack, Rückführung, Hochspannung, etc. Bisher war es deshalb kaum praxistauglich möglich, die erforderlichen Leitungen in dem Zwischenflansch unterzubringen, ohne dass die Baulänge des Zwischenflanschs übermäßig lang wurde, was zu einer störenden Verschiebung der tatsächlichen Position des Tool Center Points führte. Zur Lösung dieses Problems sieht die Erfindung vorzugsweise vor, dass der Zwischenflansch durch ein generatives Herstellungsverfahren (Rapid Prototyping) hergestellt wird. Dies ist vorteilhaft, weil sich mit einem solchen generativen Herstellungsverfahren komplexe Leitungsgeometrien realisieren lassen, so dass der Zwischenflansch mit einer relativ kurzen Baulänge realisierbar ist, was es wiederum ermöglicht, dass die tatsächliche Position des Tool Center Points durch den Zwischenflansch nicht wesentlich von der vorgegebenen und in der Robotersteuerung hinterlegten Position abweicht. Derartige generative Herstellungsverfahren sind an sich bekannt und beispielsweise in WO 2010/028864 A2 beschrieben, so dass der Inhalt dieser Druckschrift der vorliegenden Beschreibung hinsichtlich der Einzelheiten des generativen Herstellungsverfahrens in vollem Umfang zuzurechnen ist.

Der Einsatz eines generativen Herstellungsverfahrens ermöglicht auch einen schlauchlosen Zwischenflansch, was wiederum entsprechend komplexe Leitungsgeometrien und Leitungsverläufe innerhalb des Zwischenflanschs ermöglicht. Der erfindungsgemäße Zwischenflansch ist also vorzugsweise schlauchlos, d.h. es befinden sich in dem Zwischenflansch vorzugsweise keine separaten flexiblen Schläuche, um die verschiedenen Medien (z.B. Antriebsluft, Bremsluft, Lagerluft, Lenkluft, Beschichtungsmittel, Spülmittel, etc.) durchzuleiten.

In einem bevorzugten Ausführungsbeispiel der Erfindung verläuft in dem Zwischenflansch auch mindestens ein durchgehender Lichtleiterkanal zur Durchführung eines Lichtleiters zu dem Rotationszerstäuber. Ein derartiger Lichtleiter kann beispielsweise zur Drehzahlmessung eingesetzt werden, was an sich aus dem Stand der Technik bekannt ist und deshalb nicht näher beschrieben werden muss.

In dem bevorzugten Ausführungsbeispiel der Erfindung weist der Zwischenflansch einen Grundkörper und der Lichtleiterkanal eine Auskleidung auf, wobei die Auskleidung des Lichtleiterkanals aus einem anderen Material bestehen kann als der Grundkörper, insbesondere aus Kunststoff oder aus Metall.

Der Lichtleiter kann also in den Zwischenflansch montiert werden, beispielsweise durch Einschrauben, Einklemmen, Einklipsen, Einkleben oder ähnliches.

Weiterhin ist zu erwähnen, dass derartige Lichtleiter herkömmlicherweise sehr komplex gekrümmt sind und teilweise um die Fluidleitungen herumgewickelt sind, so dass die Lichtleiter auch in Umfangsrichtung gekrümmt sind. Der erfindungsgemäße Zwischenflansch ermöglicht jedoch eine wesentlich geradlinigere Führung des Lichtleiters, wobei der Lichtleiter in Umfangsrichtung nicht gekrümmt sein muss.

Darüber hinaus ermöglicht der erfindungsgemäße Zwischenflansch eine wesentlich kürzere Leiterlänge des Lichtleiters zwischen dem roboterseitigen Anschluss und dem applikationsgeräteseitigen Anschluss des Lichtleiters. Beispielsweise kann die tatsächliche Lichtleiterlänge kleiner sein als 300%, 200%, 150% oder sogar 120% der Anschlussdistanz auf direktem Weg ohne Krümmungen.

Es wurde bereits vorstehend erwähnt, dass der Zwischenflansch durch ein generatives Herstellungsverfahren hergestellt werden kann. Darüber hinaus kann auch der Roboterflansch und die Auskleidung des Lichtleiterkanals mittels eines generativen Herstellungsverfahrens hergestellt werden.

Ferner ist zu erwähnen, dass die Anschlusskonfiguration des Applikationsgeräteflansches und die Anschlusskonfiguration des Roboterflansches vorzugsweise eine Vielzahl von Anschlüssen aufweist. Beispielhaft sind hierbei folgende Anschlüsse zu nennen:
- Mindestens ein Druckluftanschluss, insbesondere für Antriebsluft und Lenkluft sowie Steuerluft für das Applikationsgerät.
- Mindestens ein Beschichtungsmittelanschluss zur Durchleitung eines Beschichtungsmittels.
- Mindestens ein erster Spülmittelanschluss zur Durchleitung eines Spülmittels zu dem Applikationsgerät.
- Mindestens ein zweiter Spülmittelanschluss zur Rückführung von Spülmittel von dem Applikationsgerät.
- Mindestens ein Elektroanschluss zur elektrischen Kontaktierung des Applikationsgerätes, beispielsweise für eine elektrostatische Beschichtungsmittelaufladung.
- Mindestens ein Lichtleiteranschluss zum Anschluss eines Lichtleiters, beispielsweise zur Drehzahlmessung an einem Rotationszerstäuber.

Die Anschlusskonfiguration des Roboterflanschs zeichnet sich in der Regel dadurch aus, dass sie mehr Anschlüsse aufweist als die Anschlusskonfiguration des Applikationsgeräteflanschs, um alternativ auch Applikationsgeräte mit mehr und/oder anderen Anschlüssen anschließen zu können. Die Anschlusskonfiguration des Roboterflanschs ist also in der Regel für alle Eventualitäten ausgestattet, damit verschiedenste Typen von Applikationsgeräten mit entsprechend unterschiedlichen Anschlusskonfigurationen über den Zwischenflansch angeschlossen werden.

Ferner ist zu erwähnen, dass die Baulänge des Zwischenflanschs vorzugsweise kleiner ist als 24 cm, 15 cm, 10 cm oder sogar 5 cm. Dies ist wesentlich kürzer als bei den eingangs beschriebenen herkömmlichen Zwischenflanschen, die nicht durch ein generatives Herstellungsverfahren hergestellt werden, was zu einer entsprechend großen Baulänge des Zwischenflanschs führt. Diese relativ große Baulänge des Zwischenflanschs hat wiederum den Nachteil, dass die tatsächliche Position des Tool Center Points durch den Zwischenflansch versetzt wurde. Der erfindungsgemäße Zwischenflansch hat diesen Nachteil wegen seiner kurzen Baulänge dagegen nicht, wobei die kurze Baulänge beispielsweise durch den Einsatz eines generativen Herstellungsverfahrens möglich ist.

Weiterhin ist zu erwähnen, dass die Erfindung nicht nur Schutz beansprucht für die vorstehend beschriebene erfindungsgemäße Roboteranordnung. Vielmehr beansprucht die Erfindung auch Schutz für ein entsprechendes Montageverfahren, bei dem Applikationsgerät und Zwischenflansch jeweils paarweise aneinander angepasst sind und gemeinsam ausgewechselt werden. Der Zwischenflansch hat hierbei zwei Funktionen.

Zum einen wählt der Zwischenflansch von den roboterseitig bereitgestellten Anschlüssen diejenigen Anschlüsse aus, die für den jeweiligen Typ des Applikationsgerätes tatsächlich benötigt werden, und stellt diese Anschlüsse in der konstruktiv bedingten Anschlusskonfiguration an seinem applikationsgeräteseitigen Anschlussflansch zur Verfügung.

Zum anderen sorgt der Zwischenflansch mit seiner individuell an den jeweiligen Typ des Applikationsgerätes angepassten Baulänge aber auch dafür, dass ein Umrüsten auf einen anderen Typ eines Applikationsgerätes nicht dazu führt, dass die tatsächliche Position des Tool Center Points verschoben wird.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1A: eine erfindungsgemäße Roboteranordnung mit einer Roboterhandachse, einem Zwischenflansch und einem Rotationszerstäuber,
- Figur 1B: die Roboterhandachse aus Figur 1A allein,
- Figur 1C: den Rotationszerstäuber aus Figur 1A allein,
- Figur 1D: den Zwischenflansch aus Figur 1A allein,
- Figur 2A: die Roboteranordnung aus Figur 1A mit einem anderen Zwischenflansch und einem anderen Zerstäuber,
- Figur 2B: die Roboterhandachse aus Figur 2A allein,
- Figur 2C: den Zerstäuber aus Figur 2A allein,
- Figur 2D: den Zwischenflansch aus Figur 2A allein,
- Figur 3A: die Roboteranordnung aus Figur 1A mit einem anderen Zwischenflansch und einem anderen Rotationszerstäuber,
- Figur 3B: die Roboterhandachse aus Figur 3A allein,
- Figur 3C: den Rotationszerstäuber aus Figur 3A allein,
- Figur 3D: den Zwischenflansch aus Figur 3A allein,
- Figur 4: einen Lichtleiter, der durch den Zwischenflansch verläuft,
- Figur 5: den Lichtleiter aus Figur 4 in einem gekrümmten Zustand,
- Figur 6: ein Ausführungsbeispiel für einen Zwischenflansch mit einem darin montierten Lichtleiter,
- Figur 7: eine Querschnittsansicht durch einen erfindungsgemäßen Zwischenflansch mit einem Lichtleiterkanal und einem darin montierten Lichtleiter,
- Figuren 8A-8D: eine Roboteranordnung gemäß dem Stand der Technik.

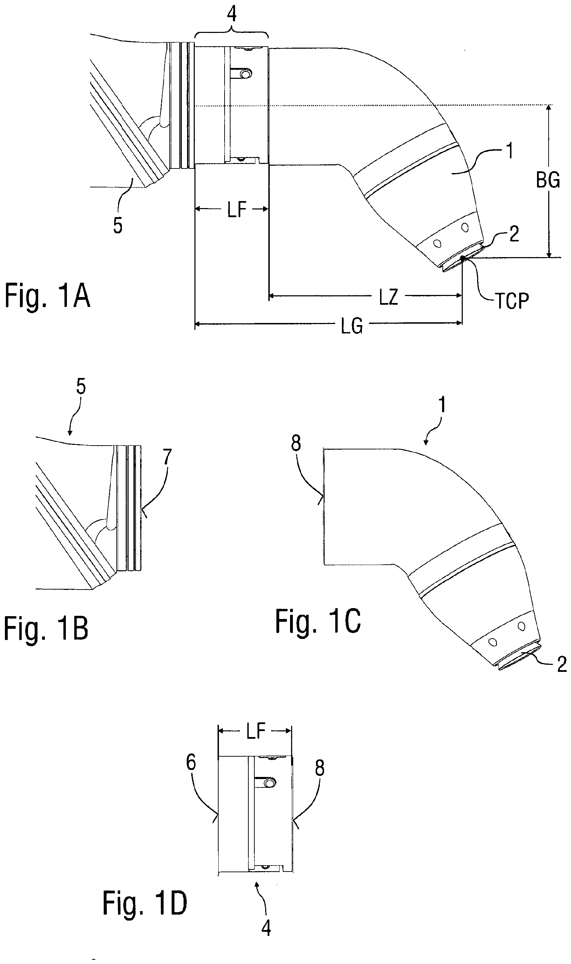

Die Figuren 1A-1D, 2A-2D und 3A-3D zeigen eine Roboterhandachse 5, wobei an der Roboterhandachse 5 verschiedene Typen von Applikationsgeräten montiert sind, wozu jeweils ein Zwischenflansch 4 vorgesehen ist. Diese Roboteranordnungen stimmen teilweise mit der bereits eingangs beschriebenen und in den Figuren 8A-8D dargestellten Roboteranordnung überein, so dass zur Vermeidung von Wiederholungen auf die vorstehende Beschreibung verwiesen wird, wobei für entsprechende Einzelheiten dieselben Bezugszeichen verwendet werden.

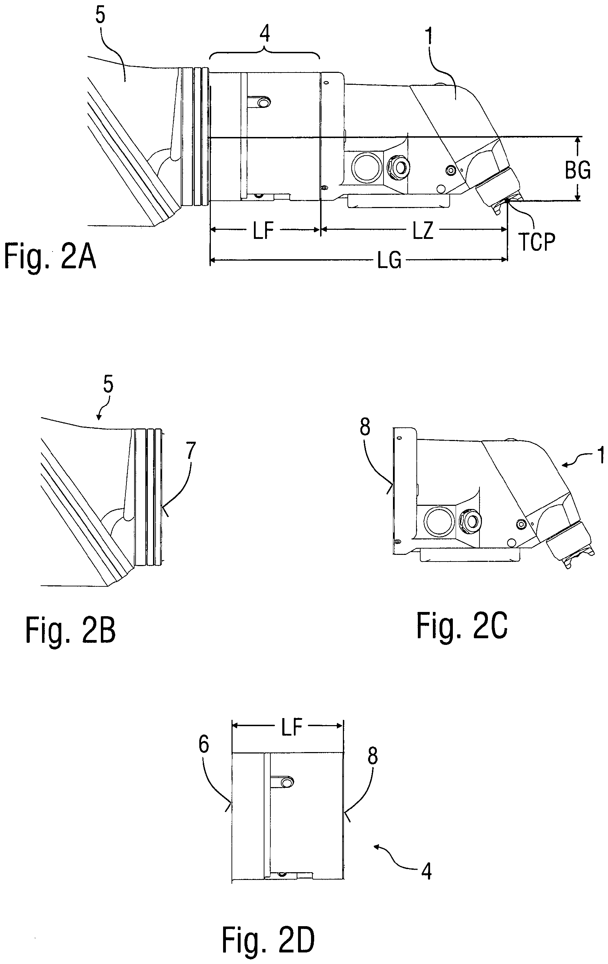

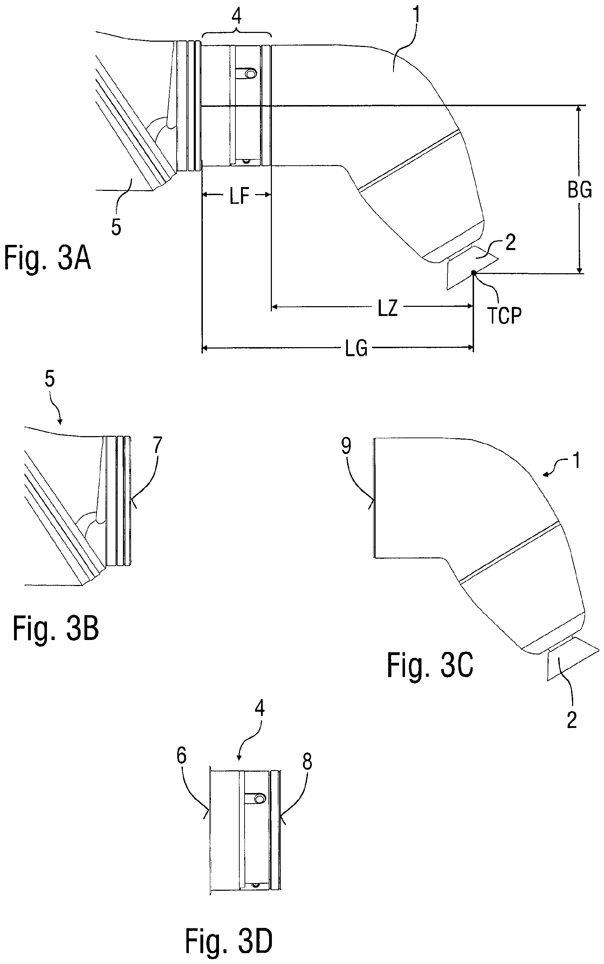

Bei der Roboteranordnung gemäß Figur 1A handelt es sich bei dem Zerstäuber 1 um einen Rotationszerstäuber ohne eine elektrostatische Außenaufladung. Bei der Roboteranordnung gemäß Figur 2A handelt es sich bei dem Zerstäuber 1 dagegen um einen Luftzerstäuber. Schließlich zeigt Figur 3A eine Roboteranordnung, wobei an der Roboterhandachse 5 ein weiterer Typ eines Zerstäubers 1 montiert ist.

Wichtig ist hierbei, dass der Roboterflansch 7 an der Roboterhandachse 5 alle Anschlüsse bereitstellt, die für die verschiedenen Typen der Zerstäuber 1 erforderlich sind. Dies hat zur Folge, dass beispielsweise bei einem Anschluss des Luftzerstäubers gemäß Figur 2A die Anschlüsse für Lenkluft an dem Roboterflansch 7 ungenutzt bleiben, da die Lenkluft nur für die Zerstäuber 1 vorgesehen ist. Der Zwischenflansch 4 wählt dann von den roboterseitig an dem Roboterflansch 7 bereitgestellten Anschlüssen diejenigen Anschlüsse aus, die für den jeweiligen Typ des Zerstäubers 1 erforderlich sind. Diese Anschlüsse werden dann an der zerstäuberseitigen Flanschfläche 8 des Zwischenflanschs 4 in derjenigen Anschlusskonfiguration bereitgestellt, die für den jeweiligen Typ des Zerstäubers 1 erforderlich ist. Der Zwischenflansch 4 bildet also einen Adapter zur Anpassung an die zerstäuberseitig geforderte Anschlusskonfiguration.

Darüber hinaus gleicht der Zwischenflansch 4 aber auch die unterschiedlichen Baulängen LZ der verschiedenen Typen von Zerstäubern 1 aus, damit ein Austausch des Zerstäubers 1 gegen einen anderen Typ eines Zerstäubers 1 nicht zu einer Verschiebung der tatsächlichen Position des Tool Center Points TCP führt. Die Baulänge LF des Zwischenflanschs 4 ist also jeweils paarweise an die Baulänge LZ des Zerstäubers angepasst, so dass die gesamte Baulänge LG zwischen dem Roboterflansch 7 und dem Tool Center Point derjenigen Baulänge entspricht, die in der zentralen Robotersteuerung hinterlegt ist. Dies hat den Vorteil, dass ein Umrüsten des Zerstäubers 1 nicht zu einem Versatz der tatsächlichen Position des Tool Center Points führt, so dass der Tool Center Point TCP im Betrieb diejenige Bahn abfährt, die zuvor programmiert wurde.

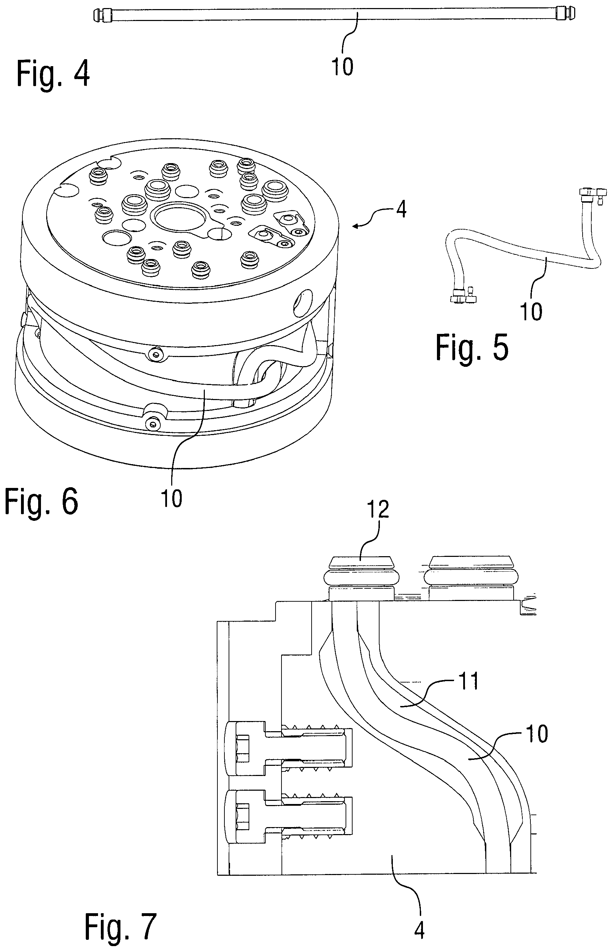

Die Figuren 4, 5 und 6 zeigen eine Abwandlung eines Zwischenflanschs 4 mit einem Lichtleiter 10, der teilweise in Umfangsrichtung um den Zwischenflansch 4 gewickelt ist, wie aus Figur 6 ersichtlich ist.

Figur 7 zeigt eine andere Bauweise des Zwischenflanschs 4, der hier mittels eines generativen Herstellungsverfahrens hergestellt ist und einen Lichtleiterkanal 11 aufweist, in dem der Lichtleiter 10 geführt ist. Dies ermöglicht eine wesentlich kürzere Lichtleiterlänge zwischen den Lichteranschlüssen 12, da der Lichtleiter 10 nicht in Umfangsrichtung gekrümmt sein muss, wie es bei dem Ausführungsbeispiel gemäß Figur 6 der Fall ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen, der durch die Ansprüche definiert wird.

### Bezugszeichenliste:

- 1: Rotationszerstäuber
- 2: Glockenteller
- 3: Außenaufladungsring
- 4: Zwischenflansch
- 5: Roboterhandachse
- 6: Roboterseitige Flanschfläche des Zwischenflanschs
- 7: Roboterflansch
- 8: Zerstäuberseitige Flanschfläche des Zwischenflanschs
- 9: Zerstäuberflansch
- 10: Lichtleiter
- 11: Lichtleiterkanal
- 12: Lichtleiteranschluss
- TCP: Tool Center Point des Zerstäubers
- LF: Baulänge des Zwischenflanschs
- LZ: Baulänge des Zerstäubers
- LG: Gesamte Baulänge von Zwischenflansch und Zerstäuber
- BG: Gesamte Breite von Zwischenflansch und Zerstäuber

## Patentansprüche

1. Roboteranordnung mit
a) einem Applikationsroboter mit einem Roboterflansch (7), wobei der Roboterflansch (7) eine bestimmte Anschlusskonfiguration aufweist,
b) einer Robotersteuerung zur Ansteuerung des Applikationsroboters, wobei in der Robotersteuerung eine bestimmte Baulänge (LG) zwischen dem Roboterflansch (7) und einem Tool Center Point (TCP) des Applikationsroboters hinterlegt ist,
c) einem Applikationsgerät (1) zur Applikation eines Beschichtungsmittels an dem Tool Center Point (TCP), wobei das Applikationsgerät (1)
c1) einen Applikationsgeräteflansch (9) mit einer bestimmten Anschlusskonfiguration und
c2) eine bestimmte Baulänge (LZ) aufweist zwischen dem Applikationsgeräteflansch (9) und dem Tool Center Point (TCP), sowie mit
d) einem Zwischenflansch (4) mit einer bestimmten Baulänge (LF), wobei der Zwischenflansch (4)
d1) zwischen dem Roboterflansch (7) und dem Applikationsgeräteflansch (9) angeordnet ist, und
d2) die Anschlusskonfiguration des Roboterflanschs (7) an die Anschlusskonfiguration des Applikationsgeräteflanschs (9) anpasst, wobei
e) die Baulänge (LF) des Zwischenflanschs (4) so an die Baulänge (LZ) des Applikationsgeräts (1) angepasst ist, dass die Summe aus der Baulänge (LZ) des Applikationsgeräts (1) und der Baulänge (LF) des Zwischenflanschs (4) im Wesentlichen gleich der in der Robotersteuerung hinterlegten Baulänge (LG) zwischen dem Roboterflansch (7) und einem Tool Center Point (TCP) des Applikationsroboters ist.

2. Roboteranordnung nach Anspruch 1,
**dadurch gekennzeichnet,**
a) **dass** der Roboterflansch (7) eine Mittelachse aufweist,
b) **dass** in der Robotersteuerung eines bestimmte Gesamtbreite (BG) zwischen der Mittelachse des Roboterflanschs (7) und dem Tool Center Point (TCP) hinterlegt ist,
c) **dass** der Zwischenflansch (4) das Applikationsgerät (1) mit einem bestimmten seitlichen Versatz an dem Roboterflansch (7) montiert, und
d) **dass** der seitliche Versatz durch den Zwischenflansch (4) so an das Applikationsgerät (1) angepasst ist, dass die tatsächliche Gesamtbreite (BG) zwischen der Mittelachse des Roboterflanschs (7) und dem Tool Center Point (TCP) mit der in der Robotersteuerung hinterlegten Gesamtbreite übereinstimmt.

3. Roboteranordnung nach einem der vorhergehenden Ansprüche, **dadurch gekennzeichnet, dass** der Zwischenflansch (4) schlauchlos ist.

4. Roboteranordnung nach einem der vorhergehenden Ansprüche, **dadurch gekennzeichnet, dass** der Zwischenflansch (4) mindestens einen durchgehenden Lichtleiterkanal (11) aufweist zur Durchführung eines Lichtleiters (10).

5. Roboteranordnung nach Anspruch 4, **dadurch gekennzeichnet, dass** der Zwischenflansch (4) einen Grundkörper und der Lichtleiterkanal eine Auskleidung aufweist, wobei die Auskleidung des Lichtleiterkanals (11) aus einem anderen Material besteht als der Grundkörper, insbesondere aus Kunststoff oder Metall.

6. Roboteranordnung nach Anspruch 4 oder 5,
**dadurch gekennzeichnet,**
a) **dass** der Lichtleiter (10) in den Zwischenflansch (4) eingeschraubt, eingeklemmt, eingeklipst und/oder eingeklebt ist, und/oder
b) **dass** der Lichtleiter (10) in Umfangsrichtung nicht gekrümmt ist.

7. Roboteranordnung nach einem der Ansprüche 4 bis 6, **dadurch gekennzeichnet,**
a) **dass** der Lichtleiter (10) eine bestimmte Lichtleiterlänge aufweist,
b) **dass** zwischen dem roboterseitigen Anschluss des Lichtleiters (10) und dem applikationsgerätseitigen Anschluss des Lichtleiters (10) eine bestimmte Anschlussdistanz liegt,
c) **dass** die Lichtleiterlänge kleiner ist als 300%, 200%, 150% oder 120% der Anschlussdistanz.

8. Roboteranordnung nach einem der vorhergehenden Ansprüche, **dadurch gekennzeichnet, dass** der Zwischenflansch (4) und/oder der Roboterflansch (7) und/oder die Auskleidung des Lichtleiterkanals (11) mindestens teilweise durch ein generatives Herstellungsverfahren hergestellt ist.

9. Roboteranordnung nach einem der vorhergehenden Ansprüche, **dadurch gekennzeichnet, dass** die Anschlusskonfiguration des Applikationsgeräteflanschs (9) und die Anschlusskonfiguration des Roboterflanschs (7) folgende Anschlüsse aufweist:
a) mindestens einen Druckluftanschluss, insbesondere für Antriebsluft und Lenkluft, Steuerluft für das Applikationsgerät (1),
b) mindestens einen Beschichtungsmittelanschluss zur Durchleitung eines Beschichtungsmittels,
c) mindestens einen ersten Spülmittelanschluss zur Durchleitung eines Spülmittels zu dem Applikationsgerät (1),
d) mindestens einen zweiten Spülmittelanschluss zur Rückführung von Spülmittel von dem Applikationsgerät (1),
e) mindestens einen Elektroanschluss zur elektrischen Kontaktierung, und/oder
f) mindestens einen Lichtleiteranschluss zum Anschluss eines Lichtleiters.

10. Roboteranordnung nach einem der vorhergehenden Ansprüche, **dadurch gekennzeichnet, dass** die Anschlusskonfiguration des Roboterflanschs (7) mehr Anschlüsse aufweist als die Anschlusskonfiguration des Applikationsgeräteflanschs (9), um alternativ auch Applikationsgeräte mit mehr und/oder anderen Anschlüssen anschließen zu können.

11. Roboteranordnung nach einem der vorhergehenden Ansprüche, **dadurch gekennzeichnet, dass** die Baulänge (LF) des Zwischenflanschs (4) kleiner ist als 24cm, 15cm, 10cm oder 5cm.

12. Verfahren zur Montage eines Applikationsgeräts (1) an einem Applikationsroboter, mit den folgenden Schritten:
a) Montieren eines Zwischenflanschs (4) an einem Roboterflansch (7) des Applikationsroboters, wobei der Zwischenflansch (4) eine bestimmte Baulänge (LF) aufweist,
b) Montieren des Applikationsgeräts (1) an dem Zwischenflansch (4), wobei das Applikationsgerät (1) eine bestimmte Baulänge (LZ) aufweist zwischen seinem Applikationsgeräteflansch (9) und einem Tool Center Point (TCP),
c) Hinterlegen einer bestimmten Baulänge (LG) zwischen dem Roboterflansch (7) und dem Tool Center Point (TCP) des Applikationsroboters in einer Robotersteuerung, wobei
d) die Baulänge (LF) des Zwischenflanschs (4) so an die Baulänge (LZ) des Applikationsgeräts (1) angepasst ist, dass die Summe aus der Baulänge (LZ) des Applikationsgeräts (1) und der Baulänge (LF) des Zwischenflanschs (4) gleich der in der Robotersteuerung hinterlegten Baulänge (LG) zwischen dem Roboterflansch (7) und dem Tool Center Point (TCP) des Applikationsroboters ist.

13. Verfahren nach Anspruch 12, **dadurch gekennzeichnet,**
a) **dass** in der Robotersteuerung eines bestimmte Gesamtbreite (BG) zwischen der Mittelachse des Roboterflanschs (7) und dem Tool Center Point (TCP) hinterlegt ist,
b) **dass** der Zwischenflansch (4) das Applikationsgerät (1) mit einem bestimmten seitlichen Versatz des Tool Center Points (TCP) an dem Roboterflansch (7) montiert, und
c) **dass** der seitliche Versatz durch den Zwischenflansch (4) so an das Applikationsgerät (1) angepasst ist, dass die tatsächliche Gesamtbreite (BG) zwischen der Mittelachse des Roboterflanschs (7) und dem Tool Center Point (TCP) mit der in der Robotersteuerung hinterlegten Gesamtbreite (BG) übereinstimmt.

14. Verfahren nach einem der Ansprüche 12 bis 13, **gekennzeichnet durch** folgende Schritte:
a) Demontieren des Applikationsgeräts (1) mit dem Zwischenflansch (4) von dem Applikationsroboter,
b) Montieren eines anderen Applikationsgeräts (1) mit einem anderen, entsprechend angepassten Zwischenflansch (4) an dem Applikationsroboter, wobei zwischen dem Beginn der Demontage des einen Applikationsgeräts (1) und dem Ende der Montage des anderen Applikationsgeräts (1) eine Wechselzeit von weniger als 5 Minuten, 2 Minuten oder 1 Minute liegt.

## Claims

1. Robot assembly having
a) an application robot with a robot flange (7), said robot flange (7) having a specific connection configuration,
b) a robot control to control the application robot, wherein a specific construction length (LG) between the robot flange (7) and a tool centre point (TCP) of the application robot is stored in the robot control,
c) an application device (1) for the application of a coating agent to the tool centre point (TCP), the application device (1) having
c1) an application device flange (9) with a specific connection configuration and
c2) a specific construction length (LZ) between the application device flange (9) and the tool centre point (TCP), and with
d) an intermediate flange (4) with a specific construction length (LF), the intermediate flange (4)
d1) being arranged between the robot flange (7) and the application device flange (9), and
d2) the connection configuration of the robot flange (7) matching the connection configuration of the application device flange (9),
e) wherein the construction length (LF) of the intermediate flange (4) is matched to the construction length (LZ) of the application device (1) so that the sum of the construction length (LZ) of the application device (1) and the construction length (LF) of the intermediate flange (4) is substantially equal to the construction length (LG) between the robot flange (7) and a tool centre point (TCP) of the application robot stored in the robot control.

2. Robot assembly according to claim 1,
**characterized in that**
a) the robot flange (7) has a central axis,
b) a specific overall width (BG) between the central axis of the robot flange (7) and the tool centre point (TCP) is stored in the robot control,
c) the intermediate flange (4) assembles the application device (1) on the robot flange (7) with a specific lateral offset, and
d) the lateral offset through the intermediate flange (4) is matched to the application device (1) so that the actual overall width (BG) between the central axis of the robot flange (7) and the tool centre point (TCP) conforms to the overall width stored in the robot control.

3. Robot assembly according to any of the previous claims **characterized in that** the intermediate flange (4) is tubeless.

4. Robot assembly according to any of the previous claims **characterized in that** the intermediate flange (4) has at least an end-to-end light guide channel (11) to feed a light guide (10) through.

5. Robot assembly according to claim 4, **characterized in that** the intermediate flange (4) has a base body and the light guide channel has a cladding, said cladding of the light guide channel (11) consisting of a different material than the base body, particularly made of plastic or metal.

6. Robot assembly according to claim 4 or 5, **characterized in that**
a) the light guide (10) is screwed, clamped, clipped and/or glued into the intermediate flange (4), and/or
b) the light guide (10) is not curved in the circumferential direction.

7. Robot assembly according to any of claims 4 to 6, **characterized in that**
a) the light guide (10) has a specific light guide length,
b) a specific connection distance lies between the robot-side connection of the light guide (10) and the application device-side connection of the light guide (10),
c) the light guide length is less than 300 %, 200 %, 150 % or 120 % of the connection distance.

8. Robot assembly according to any of the previous claims **characterized in that** the intermediate flange (4) and/or the robot flange (7) and/or the cladding of the light guide channel (11) is at least partially manufactured by a generative manufacturing process.

9. Robot assembly according to any of the previous claims **characterized in that** the connection configuration of the application device flange (9) and the connection configuration of the robot flange (7) has the following connections:
a) at least one compressed air connection, particularly for drive air and shaping air, control air for the application device (1),
b) at least one coating agent connection for feeding through a coating agent,
c) at least one first flushing agent connection for feeding through a flushing agent to the application device (1),
d) at least one second flushing agent connection for withdrawing flushing agent from the application device (1),
e) at least one electric connection to establish electric contact, and/or
f) at least one light guide connection to connect a light guide.

10. Robot assembly according to any of the previous claims **characterized in that** the connection configuration of the robot flange (7) has more connections than the connection configuration of the application device flange (9) in order optionally to be able to connect application devices with more and/or other connections.

11. Robot assembly according to any of the previous claims **characterized in that** the construction length (LF) of the intermediate flange (4) is less than 24 cm, 15 cm, 10 cm or 5 cm.

12. Method for assembling an application device (1) to an application robot comprising the following steps:
a) Assembling an intermediate flange (4) to a robot flange (7) of the application robot, the intermediate flange (4) having a specific construction length (LF),
b) Assembling the application device (1) to the intermediate flange (4), the application device (1) having a specific construction length (LZ) between its application device flange (9) and a tool centre point (TCP),
c) Storing in a robot control a specific construction length (LG) between the robot flange (7) and the tool centre point (TCP) of the application robot,
d) wherein the construction length (LF) of the intermediate flange (4) is matched to the construction length (LZ) of the application device (1) so that the sum of the construction length (LZ) of the application device (1) and the construction length (LF) of the intermediate flange (4) is equal to the construction length (LG) between the robot flange (7) and the tool centre point (TCP) of the application robot stored in the robot control.

13. Method according to claim 12, **characterized in that**
a) a specific overall width (BG) between the central axis of the robot flange (7) and the tool centre point (TCP)is stored in the robot control,
b) the intermediate flange (4) assembles the application device (1) on the robot flange (7) with a specific lateral offset of the tool centre point (TCP), and
c) the lateral offset through the intermediate flange (4) is matched to the application device (1) so that the actual overall width (BG) between the central axis of the robot flange (7) and the tool centre point (TCP) conforms to the overall width stored in the robot control.

14. Method according to any of claims 12 to 13 **characterized by** the following steps:
a) Disassembling the application device (1) with the intermediate flange (4) from the application robot,
b Assembling a different application device (1) with a different, suitably matched intermediate flange (4) to the application robot, there being a replacement period of less than 5 minutes, 2 minutes or 1 minute between the start of disassembling the one application device (1) and the end of assembling the other application device (1).

## Revendications

1. Système de robot avec
a) un robot d'application avec une bride de robot (7), dans lequel la bride de robot (7) présente une configuration de raccordement déterminée,
b) une commande de robot pour le contrôle du robot d'application, dans lequel, dans la commande de robot, est enregistrée une longueur de construction (LG) déterminée entre la bride de robot (7) et un Tool Center Point (TCP) du robot d'application,
c) un appareil d'application (1) pour l'application d'un produit de revêtement sur le Tool Center Point (TCP), dans lequel l'appareil d'application (1)
c1) comprend une bride d'appareil d'application (9) avec une configuration de raccordement déterminée et
c2) présente une longueur de construction (LZ) déterminée entre la bride d'appareil d'application (9) et le Tool Center Point (TCP), ainsi qu'avec
d) une bride intermédiaire (4) avec une longueur de construction (LF) déterminée, dans lequel la bride intermédiaire (4)
d1) est disposée entre la bride du robot (7) et la bride de l'appareil d'application (9) et
d2) adapte la configuration de raccordement de la bride du robot (7) à la configuration de raccordement de l'appareil d'application (9),
dans lequel
e) la longueur de construction (LF) de la bride intermédiaire (4) est adaptée à la longueur de construction (LZ) de l'appareil d'application (1) de façon à ce que la somme de la longueur de construction (LZ) de l'appareil d'application (1) et de la longueur de construction (LF) de la bride intermédiaire (4) est globalement égal à la longueur de construction (LG) entre la bride de robot (7) et un Tool Center Point (TCP) du robot d'application, enregistrée dans la commande du robot.

2. Système de robot selon la revendication 1,
**caractérisé en ce que**
a) la bride du robot (7) comprend un axe central,
b) dans la commande du robot, une largeur totale (BG) déterminée entre l'axe central de la bride de robot (7) et le Tool Center Point (TCP) est enregistrée,
c) la bride intermédiaire (4) permet de monter l'appareil d'application (1) avec un décalage latéral déterminé sur la bride du robot (7) et
d) le décalage latéral est adapté par la bride intermédiaire (4) à l'appareil d'application (1) de façon à ce que la largeur totale (BG) réelle entre l'axe central de la bride de robot (7) et le Tool Center Point (TCP) corresponde avec la largeur totale enregistrée dans la commande du robot.

3. Système de robot selon l'une des revendications précédentes, **caractérisé en ce que** la bride intermédiaire (4) est sans gaine.

4. Système de robot selon l'une des revendications précédentes, **caractérisé en ce que** la bride intermédiaire (4) comprend au moins un canal de fibre optique traversant (11) pour le passage d'une fibre optique (10).

5. Système de robot selon la revendication 4, **caractérisé en ce que** la bride intermédiaire (4) comprend un corps de base et le canal de fibre optique comprend un revêtement, dans lequel le revêtement du canal de fibre optique (11) est constitué d'un matériau différent du corps de base, plus particulièrement de matière plastique ou de métal.

6. Système de robot selon la revendication 4 ou 5,
**caractérisé en ce que**
a) la fibre optique (10) est vissée, serrée, clipsée et/ou collée dans la bride intermédiaire (4) et/ou
b) la fibre optique (10) n'est pas incurvée das la direction circonférentielle.

7. Système de robot selon l'une des revendications 4 à 6,
**caractérisé en ce que**
a) la fibre optique (10) présente une longueur de fibre optique déterminée,
b) entre le raccordement côté robot de la fibre optique (10) et le raccordement côté appareil d'application de la fibre optique (10), il existe une distance de raccordement déterminée,
c) la longueur de fibre optique est inférieure à 300 %, 200 % 150 % ou 120 % de la distance de raccordement.

8. Système de robot selon l'une des revendications précédentes, **caractérisé en ce que** la bride intermédiaire (4) et/ou la bride du robot (7) et/ou le revêtement du canal de fibre optique (11) est fabriqué au moins partiellement à l'aide d'un procédé de fabrication additif.

9. Système de robot selon l'une des revendications précédentes, **caractérisé en ce que** la configuration de raccordement de la bride de l'appareil d'application (9) et la configuration de raccordement de la bride du robot (7) comprend les raccords suivants :
a) au moins un raccord d'air comprimé, plus particulièrement pour l'air d'entraînement et l'air de guidage, l'air de commande pour l'appareil d'application (1),
b) au moins un raccord de produit de revêtement pour le passage d'un produit de revêtement,
c) au moins un premier raccord de produit de rinçage pour le passage d'un produit de rinçage vers l'appareil d'application (1),
d) au moins un deuxième raccord de produit de rinçage pour le retour du produit de rinçage de l'appareil d'application (1),
e) au moins un raccord électrique pour le branchement électrique et/ou
f) au moins un raccord de fibre optique pour le raccordement d'une fibre optique.

10. Système de robot selon l'une des revendications précédentes, **caractérisé en ce que** la configuration de raccordement de la bride du robot (7) comprend plus de raccords que la configuration de raccordement de la bride de l'appareil d'application (9), afin de pouvoir raccorder, en variante, des appareils d'application supplémentaires avec plus et/ou d'autres raccords.

11. Système de robot selon l'une des revendications précédentes, **caractérisé en ce que** la longueur de construction (LF) de la bride intermédiaire (4) est inférieure à 24 cm, 15 cm, 10cm ou 5 cm.

12. Procédé de montage d'un appareil d'application (1) sur un robot d'application, avec les étapes suivantes :
a) montage d'une bride intermédiaire (4) sur une bride de robot (7) du robot d'application, dans lequel la bride intermédiaire (4) présente une longueur de construction (LF) déterminée,
b) montage de l'appareil d'application (1) sur la bride intermédiaire (4), dans lequel l'appareil d'application (1) présente une longueur de construction (LZ) entre sa bride d'appareil d'application (9) et un Tool center Point (TCP),
c) enregistrement d'une longueur de construction (LG) déterminée entre la bride du robot (7) et le Tool center Point (TCP) du robot d'application dans une commande de robot
dans lequel
d) la longueur de construction (LF) de la bride intermédiaire (4) est adaptée à la longueur de construction (LZ) de l'appareil d'application (1) de façon à ce que la somme de la longueur de construction (LZ) de l'appareil d'application (1) et la longueur de construction (LF) de la bride intermédiaire (4) est égale à la longueur de construction (LG) entre la bride du robot (7) et le Tool center Point (TCP) du robot d'application, enregistrée dans la commande du robot.

13. Procédé selon la revendication 12, **caractérisé en ce que**
a) dans la commande du robot, est enregistrée une largeur totale (BG) déterminée entre l'axe central de la bride du robot (7) et le Tool center Point (TCP),
b) la bride intermédiaire (4) de l'appareil d'application (1) est monté avec un décalage latéral déterminé du Tool center Point (TCP) sur la bride du robot (7) et
c) le décalage latéral est adapté par la bride intermédiaire (4) à l'appareil d'application (1) de façon à ce que la largeur totale (BG) réelle entre l'axe central de la bride du robot (7) et le Tool center Point (TCP) corresponde avec la largeur totale (BG) enregistrée dans la commande du robot.

14. Procédé selon l'une des revendications 12 à 13, **caractérisé par** les étapes suivantes :
a) démontage de l'appareil d'application (1) avec la bride intermédiaire (4) du robot d'application,
b) montage d'un autre appareil d'application (1) avec une autre bride intermédiaire (4) adaptée de manière correspondante au robot d'application, dans lequel, entre le début du démontage de l'appareil d'application (1) et la fin du montage de l'autre d'appareil d'application (1), s'écoule un temps de changement inférieur à 5 minutes, 2 minutes ou 1 minute.
